# EUROPEAN PATENT SPECIFICATION

(11) **EP 2 102 135 B1**
(45) Date of publication and mention of the grant of the patent: **11.08.2010**
(21) Application number: 08701306.6
(22) Date of filing: 08.01.2008
(51) Int. Cl.: C04B 41/82

(54) **CERAMIC INKS AND CERAMIC COLOURS VEHICLES BASED ON AQUEOUS EMULSIONS**
AUF WÄSSRIGEN EMULSIONEN BASIERENDE VEHIKEL FÜR KERAMIKTINTEN UND KERAMIKFARBEN
ENCRES CÉRAMIQUES ET MILIEUX DE SUSPENSION POUR COULEURS CÉRAMIQUE À BASE D'ÉMULSIONS AQUEUSES

(30) Priority: 12.01.2007 IT VA20070002
(43) Date of publication of application: 23.09.2009
(73) Proprietor: Lamberti Spa, 21041 Albizzate (VA) (IT)
(72) Inventor: PRAMPOLINI, Paolo, I-41051 Castelnuovo Rangone (MO) (IT); NAPPA, Alan, I-41100 Modena (IT); LI BASSI, Giuseppe, I-21026 Gavirate (VA) (IT)
(86) International application number: PCT/EP2008/050136
(87) International publication number: WO 2008/084042

(56) References cited:
- GB-A- 241 018
- US-B1- 6 544 530

## Description

### Technical Field

The present invention relates to mediums for ceramic pigments, to ceramic inks and to a method for decorating green or fired ceramic substrates by the use of said inks.

The ceramic inks of the invention are mainly constituted of ceramic pigments dispersed in mediums which are prepared with products from vegetal renewable sources.

### Background Art

Mediums for ceramic pigments (ceramic mediums) are fluids used in the preparation of ceramic inks to disperse ceramic pigments, to regulate viscosity, flowing properties, and binding-cohesive behaviour.

Most traditional ceramic manufactured products, such as wall tiles and floor tiles, are made of a ceramic body conferring form and mechanical properties to the object; the ceramic substrate generally has some porosity and poor aesthetic qualities.

Said substrate, which is defined "green" or, alternatively, "fired", if previously fired, is then usually coated with another ceramic layer, called ceramic glaze; the ceramic glaze is completely sintered by firing, in such a way to gain suitable superficial aesthetic qualities and, in the meantime, to become a fluid-proof barrier; as a matter of fact, after firing, the ceramic glaze has usually zero porosity and is generally resistant to abrasion and to the attack of chemical agents such as acids, bases, dyes.

The aesthetic finishing of the ceramic material can be completed by a decoration phase, that is by the application of sinterable and variably coloured ceramic materials (ceramic pigments) deposed according to a precise drawing (decor) .

The decor can be applied either on the green or fired substrate, on which the glaze was previously set, or, in the decorations called third firing, after the firing on the glaze.

The main printing techniques used in the decoration either of green or fired ceramic substrate are flat screen printing, rotary screen printing and the decoration by silicone roller (comprising the printing through laser engraved roller, or "rotogravure printing", and the printing through relief engraved roller, or "silicone stamp printing"); the decoration by silicon roller is also called rotogravure.

All these decoration techniques require a series of overlapping printings, for the number of colours composing the drawing.

Ceramic inks and mediums are formulated according to the kind of substrate to which they will be applied (green ceramic, fired ceramic, sintered glaze, glass, paper...) and according to the application technique used (brush, spatula, screen printing, rotogravure printing...).

In the preparation of ceramic inks for the screen printing or rotogravure decorations of green or fired ceramic substrates, mediums based on mixtures of water and glycols and normally containing additives, such as rheology modifiers, binders and plasticizers, (traditional mediums) are generally used.

Document GB 241 018 discloses a vitreous enamel composition for tiles comprising frit, colouring matter and vegetable oil.

For the final user it is important that the medium is stable, provides stable ceramic inks and décors having good definition.

Mediums based on water and glycols do possess these requisites, but suffer from some drawbacks too.

In particular, some of the most frequently used glycols, ethylene glycol and diethylene glycol, are labelled as harmful substances.

Furthermore, glycols are industrial products deriving from mineral oil (and it is well known that the world oil supply is limited) and the glycols price is subject to wide fluctuations that in the latest years are averagely directed to a strong rise.

### Disclosure of Invention

It has now been found that, by using aqueous emulsions of glycerol and specific vegetable oils in the formulation of mediums for ceramic pigments it is possible to obtain stable mediums and stable inks that provide good printing quality and lack the above cited drawbacks.

Glycerol and vegetable oils useful for the realization of the present invention are as a matter of fact non harmful products.

Glycerol is obtained from renewable sources, in particular from bio-diesel productions, and in general from saponification, transesterification or hydrolysis of animal and vegetable fats and oils; vegetable oils are obviously obtainable from renewable sources.

Stable emulsions of vegetable oils in glycerol are known and described, by way of example, in US 6,544,530; in the same patent it is also reported that it is possible to easily dilute in water said emulsions; glycerol dissolves in water and the oily phase remains in emulsified form originating an oil-in-water/glycerol emulsion which is said to be stable.

Oil-in-water/glycerol emulsions are also described in US 5,350,773.

The oil-in-water/glycerol emulsions of the prior art are limitedly used in the pharmaceutical and cosmetic fields and the prior art does not suggest their use in the formulation of mediums for ceramic pigments.

It is therefore a fundamental object of the present invention a method to decorate green or fired ceramic substrates comprising the following steps:
(i) one or more ceramic inks are prepared by dispersing and milling in a mill 100 parts by weight of ceramic pigments in the presence of I) from 0 to 500 parts by weight of water; II) from 50 to 3,000, preferably from 50 to 100 parts by weight of a medium containing: a. from 5 to 50% by weight, preferably from 20 to 40% by weight, of glycerol; b. from 5 to 50 % by weight, preferably from 10 to 30% by weight, of a vegetable oil containing at least 70% by weight of triglycerides of C₁₆-C₂₂ monounsaturated or polyunsaturated fatty acids; c. from 5 to 50%, preferably from 20 to 50% by weight, of water; d. from 1 to 10% by weight of emulsifier; (ii) the glaze is spread on the green or fired substrate surface; (iii) the decoration is made by means of flat screen printing, or rotary screen printing, or rotogravure, utilising one or more of the inks of point (i); (iv) the obtained substrate is fired at a temperature comprised between 900 and 1,250°C for 15-240 minutes.

It is a further object of the present invention a ceramic ink, useful for the screen printing and rotogravure decoration of green or fired ceramic substrates, comprising 100 parts by weight of ceramic pigments dispersed in: A. from 2.5 to 1,500, preferably from 10 to 40, parts by weight of glycerol; B. from 2.5 to 1,500, preferably from 5 to 33, parts by weight of a vegetable oil containing at least 70% by weight of triglycerides of C₁₆-C₂₂ monounsaturated or polyunsaturated fatty acids; C. from 2.5 to 1,550, preferably from 5 to 550, parts by weight of water; D. from 0.5 to 300, preferably from 1 to 10, parts by weight of emulsifier.

Advantageously, the glycerol used for the realization of the present invention is technical grade glycerol (also called "glycerine") which is obtained from renewable sources and comprises at least 95% of the pure substance (1,2,3-trihydroxypropane).

Although glycerol possesses chemical functionality, solubility in water and boiling point similar to those of the glycols which are normally used for the preparation of ceramic mediums, it was found that it is not possible to simply replace glycols with glycerol to obviate to the above mentioned drawbacks of traditional mediums.

Many attempts made in this direction, performed by introducing in the medium specific thickeners and binders, did not provide satisfactory results.

In particular, it was found that glycerol-and-water based mediums have a very bad rheology and that their behaviour during firing, mainly because of the presence of fumes, is not suitable for industrial use.

On the contrary, the joined presence of glycerol and proper amount of vegetable oil containing at least 70% by weight of triglycerides of C₁₆-C₂₂ monounsaturated or polyunsaturated fatty acids allowed the obtainment of aqueous ceramic mediums having good quality and based on ingredients derived from renewable sources.

Among the vegetable oils used for the preparation of the aqueous ceramic mediums of the invention we cite: rape oil, olive oil, sunflower oil, soybean oil, corn oil.

Preferably the vegetable oil is rape oil.

The vegetable oil useful for the realization of the present invention may be technical grade or food grade oil.

The inks of the invention contain one or more emulsifiers. Examples of useful emulsifiers are polyols polyhydroxystearates and polyols polyricinoleates.

Emulsifiers which revealed to be particularly suitable for the use in ceramic printing are polyols polyhydroxystearates and polyols polyricinoleates obtained by esterification of polyhydroxystearic or polyricinoleic acid having polymerization number comprised between 2 and 10, preferably between 2 and 6, with a polyol having from 2 to 12 hydroxyl groups.

Typical examples of utilizable polyols are; alkylene glycols (such as diethylene glycol and ethylene glycol), polyalkylene glycols (such as polyethylene glycol and polypropylene glycol), glycerol, trimethylolpropane, trimethylolethane, pentaerythritol, alkyl glucosides, sugars.

Due to their excellent performance, the most preferred emulsifiers are those obtained by esterification of polyhydroxystearic or polyricinoleic acid having polymerization number comprised between 2 and 10 with a polyalkylene glycol.

It is therefore a further object of the present invention an aqueous emulsion, useful as medium for ceramic pigments, comprising: a. from 5 to 50% by weight, preferably from 20 to 40% by weight, of glycerol; b. from 5 to 50 % by weight, preferably from 10 to 30% by weight, of a vegetable oil containing at least 70% by weight of triglycerides of C₁₆-C₂₂ monounsaturated or polyunsaturated fatty acids; c. from 5 to 50%, preferably from 20 to 50% by weight, of water; d. from 1 to 10% by weight of an emulsifier obtained by esterification of polyhydroxystearic or polyricinoleic acid having polymerization number comprised between 2 and 10 with a polyalkylene glycol.

Specifically, the use of a polyethylene glycol polyhydroxystearate obtained by esterification of 2 moles of polyhydroxystearic acid having polymerization number comprised between 2 and 10, preferably between 2 and 6, with from 1 to 2 moles, preferably from 1.0 to 1.2 moles, of polyethylene glycol having molecular weight from 200 to 1,000, preferably from 400 to 800, revealed to be advantageous.

The mediums of the invention are homogeneous fluids with Haake viscosity ranging from 30 to 500 mPa·s between 0.1 and 1,000 sec⁻¹.

The correct viscosity is chosen according to the type of printing technique selected for the decoration.

Mediums having low viscosity (30-100 mPa·s) and newtonian or lightly pseudoplastic behaviour are used when a rotogravure printing ceramic ink is to be prepared; mediums having higher viscosity (100 - 500 mPa*s) and more pseudoplastic behaviour are used when a ceramic ink for flat or rotary screen printing is to be prepared.

Viscosity and pseudoplasticity can be regulated, according to what is well known to those skilled in the art, optionally adding a thickener, such as a cellulose ether, hydroxyalkyl guar, acrylic polymer.

For the realisation of the present invention it is also possible to use mixture of thickeners having different thickening properties and different rheological behaviour.

The mediums of the present invention may contain up to 10% by weight of one or more additives among those commonly used, such as thickeners, binders, preservatives, biocides, antifoams, dispersants, levelling agents, and so forth.

The preparation of the medium according the invention can be performed by mixing the ingredients, under mechanical stirring at high shear stress (by way of example using an emulsifying device it is preferable to previously prepare the vegetable oil-emulsifier mixture, to add water, glycerol and optionally the pre-mixed binders, and to complete the preparation with the addition of other possible additives.

Among the utilizable binders we cite in particular acrylic copolymers, such as methyl methacrylate/acrylic acid/ethyl acrylate copolymers having high rigidity.

The preparation of the medium is normally done at room temperature.

The ceramic pigments useful in the ceramic inks of the invention are solid sinterable materials, that means that they are transformed in ceramic during the firing process; these are oxides, pigments, frits, glasses and other ceramic materials; they are in the form of solid particles having dimensions varying from 0.5 to 100 micron.

Typically, they include iron, titanium, chromium, zinc, magnesium, aluminium, cobalt, and cadmium oxides, and zirconium and praseodymium silicates.

### Example 1.

Mediums Preparation.

Two mediums for ceramic pigments were prepared (Medium S and R).

Medium S has a basic composition (viscosity and type of binder) that renders it fit for use in flat silk-screen printing (or for rotary screen printing).

Medium R has a basic composition (viscosity and type of binder) that renders it fit for use in rotogravure printing.

The mediums are prepared by mixing water, glycerine and the water soluble ingredients that form the aqueous phase and, separately, by preparing the oil phase homogenising the oil and the emulsifier.

The aqueous phase is then added into the oil phase, homogenising with a Silverson stirrer.

The composition of Mediums S and R is reported in Table 1 (ingredients parts by weight).

Among the utilised ingredients:
- Sipacril 4948 is a 30% latex acrylic thickener produced by Lamberti SpA (methacrylic acid/ethyl acrylate/ethoxylated methacrylate crosslinked copolymer);
- Sipacril 2603 is a 40% latex acrylic binder produced by Lamberti SpA (acrylic acid/ methyl methacrylate/ethyl acrylate copolymer with Tg about 32°C);
- Reotan HS is a 40% solution of an acrylic dispersant produced by Lamberti SpA;
- TEA is 99% triethanolamine;
- Nixolen SL2 is a random copolymer of ethylene oxide/propylene oxide used as wetting agent and commercialised by Univar;
- DAF/1 is an antifoam based on mineral oil and commercialised by Protea;
- VET 508 is the diester of polyhydroxystearic acid having number of polymerization 4 and polyethylene glycol with molecular weight about 600.

**Table 1**

| | | Medium S | Medium R |
|---|---|---|---|
| Aqueous phase | water | 35 | 35 |
| | glycerine | 25 | 25 |
| | Sipacril 4948 | 4 | - |
| | Sipacril 2603 - | | 5 |
| | TEA | 1 | - |
| | Reotan HS | 3 | - |
| | DAF/1 | 0.2 | 0.2 |
| | Nixolen SL2 | 5 | 10 |
| Oil phase | VET 508 | 4 | 4 |
| | Rape oil | 22.8 | 20.8 |

The Mediums S and R are homogenous milky emulsions.

They are stable, i.e. they do not present separation phenomena after 5 days storage at 40°C or after 30 days storage at room temperature.

### Example 2.

Preparation of the ceramic inks and ceramic decoration.

2 ceramic inks were prepared by mixing, using a mill, each of the 2 mediums prepared in Example 1 with a frit and water, in the proportion by weight indicated in Table 2.

The ink IS is prepared starting from Medium S, ink IR starting from medium R.

The numbers of Table 2 are parts by weight (pbw)

**Table 2**

| Ink | Medium (pbw) | Water (pbw) | Frit (pbw) |
|---|---|---|---|
| IS | 80 | 0 | 100 |
| IR | 70 | 30 | 100 |

The viscosity of the inks IS and IR was measured with a Haake Rheometer through a flow curve between 0.1 e 300 sec⁻¹ at 25°C and is respectively 360 mPa·s and 193 mPa*s.

The inks IS and IR are stable.

It is considered stable an ink that stored at room temperature for 72 hours after its preparation does not present separation phenomena or lumps formation.

The ink IS was applied through flat silk-screen printing (90, 73, 60 and 55 threads per cm) on the ceramic substrate and gave good printing definition.

The ink IR was applied through rotogravure printing on the same substrate, obtaining good printing definition.

The drying time of the décor is in both cases short.

## Claims

1. Method to decorate green or fired ceramic substrates comprising the following steps: (i) one or more ceramic inks are prepared by dispersing and milling in a mill 100 parts by weight of ceramic pigments in the presence of I) from 0 to 500 parts by weight of water; II) from 50 to 3,000, parts by weight of a medium containing: a. from 5 to 50% by weight of glycerol; b. from 5 to 50 % by weight of a vegetable oil containing at least 70% by weight of triglycerides of C₁₆-C₂₂ monounsaturated or polyunsaturated fatty acids; c. from 5 to 50% by weight of water; d. from 1 to 10% by weight of emulsifier; (ii) the glaze is spread on the green or fired substrate surface; (iii) the decoration is made by means of flat screen printing, or rotary screen printing, or rotogravure, utilising one or more of the inks of point (i);(iv) the obtained substrate is fired at a temperature comprised between 900 and 1,250°C for 15-240 minutes.

2. Method to decorate green or fired ceramic substrates according to claim 1
wherein 100 parts by weight of ceramic pigments are dispersed and milled in a mill in the presence of from 50 to 100 parts by weight of a medium containing from from 20 to 40% by weight of glycerol, from 10 to 30% by weight of vegetable oil and from 20 to 50% by weight of water.

3. Method to decorate green or fired ceramic substrates according to claim 1 or 2 wherein the vegetable oil selected from rape oil, olive oil, sunflower oil, soybean oil, corn oil and mixture thereof.

4. Method to decorate green or fired ceramic substrates according to claim 3
wherein the vegetable oil is rape oil.

5. Method to decorate green or fired ceramic substrates according to claim 1 or 2 wherein the emulsifier is a polyol polyhydroxystearate or a polyol polyricinoleate.

6. Method to decorate green or fired ceramic substrates according to claim 5
wherein the emulsifier is a polyalkylene glycol polyhydroxystearate or a polyalkylene glycol polyricinoleate.

7. Method to decorate green or fired ceramic substrates according to claim 6
wherein the emulsifier is a polyalkylene glycol polyhydroxystearate obtained by esterification of 2 moles of polyhydroxystearic acid having polymerization number comprised between 2 and 10 with from 1 to 2 moles of polyethylene glycol having molecular weight from 200 to 1,000.

8. Method to decorate green or fired ceramic substrates according to claim 7
wherein the emulsifier is a polyalkylene glycol polyhydroxystearate obtained by esterification of 2 moles of polyhydroxystearic acid having polymerization number comprised between 2 and 6 with from 1.0 to 1.2 moles of polyethylene glycol having molecular weight from 400 to 800.

9. Ceramic ink comprising 100 parts by weight of ceramic pigments dispersed in:
A. from 2.5 to 1,500 parts by weight of glycerol; B. from 2.5 to 1,500 parts by weight of a vegetable oil containing at least 70% by weight of triglycerides of C ₁₆-C₂₂ monounsaturated or polyunsaturated fatty acids; C. from 2.5 to 1,550 parts by weight of water; D. from 0.5 to 300 parts by weight of emulsifier.

10. Ceramic ink according to claim 9 wherein the ceramic pigments are dispersed in from 10 to 40 parts by weight of glycerol, from 5 to 33 parts by weight of vegetable oil, from 5 to 550 parts by weight of water and from 1 to 10 parts by weight of emulsifier.

11. Ceramic ink according to claim 9 or 10 wherein the vegetable oil selected from rape oil, olive oil, sunflower oil, soybean oil, corn oil and mixture thereof.

12. Ceramic ink according to claim 11 wherein the vegetable oil is rape oil.

13. Ceramic ink according to claim 9 or 10 wherein the emulsifier is a polyol polyhydroxystearate or a polyol polyricinoleate.

14. Ceramic ink according to claim 13 wherein the emulsifier is a polyalkylene glycol polyhydroxystearate or a polyalkylene glycol polyricinoleate.

15. Ceramic ink according to claim 14 wherein the emulsifier is a polyalkylene glycol polyhydroxystearate obtained by esterification of 2 moles of polyhydroxystearic acid having polymerization number comprised between 2 and 10 with from 1 to 2 moles of polyethylene glycol having molecular weight from 200 to 1,000.

16. Ceramic ink according to claim 15 wherein the emulsifier is a polyalkylene glycol polyhydroxystearate obtained by esterification of 2 moles of polyhydroxystearic acid having polymerization number comprised between 2 and 6 with from 1.0 to 1.2 moles of polyethylene glycol having molecular weight from 400 to 800.

17. Aqueous emulsion comprising: a. from 5 to 50% by weight of glycerol; b. from 5 to 50 % by weight of a vegetable oil containing at least 70% by weight of triglycerides from C₁₆-C₂₂ monounsaturated or polyunsaturated fatty acids; c. from 5 to 50% by weight of water; d. from 1 to 10% by weight of an emulsifier obtained by esterification of polyhydroxystearic or polyricinoleic acid having polymerization number comprised between 2 and 10 with a polyalkylene glycol.

18. Aqueous emulsion according to claim 17 comprising from 20 to 40% by weight of glycerol, from 10 to 30% by weight of vegetable oil and from 20 to 50% by weight of water.

19. Aqueous emulsion according to claim 18 wherein the emulsifier is obtained by esterification of 2 moles of polyhydroxystearic acid having polymerization number comprised between 2 and 10 with from 1 to 2 moles of polyethylene glycol having molecular weight from 200 to 1,000.

20. Aqueous emulsion according to claim 19 wherein the emulsifier is obtained by esterification of 2 moles of polyhydroxystearic acid having polymerization number comprised between 2 and 6 with from 1.0 to 1.2 moles of polyethylene glycol having molecular weight from 400 to 800.

## Patentansprüche

1. Methode zum Dekorieren grüner oder gebrannter Keramiksubstrate, bestehend aus folgenden Schritten: (i) eine oder mehrere Keramiktinten werden zubereitet, indem man in einer Mühle 100 Gewichtsanteile Keramikpigmente in Präsenz von I) 0 bis 500 Gewichtsanteilen Wasser; II) 50 bis 3,000 Gewichtsanteilen eines Mediums, das: a. 5 bis 50% Gewichtsanteile Glycerol; b. 5 bis 50 % Gewichtsanteile Pflanzenöl, das mindestens 70% Gewichtsanteile Triglyceride von C₁₆-C₂₂ einfach ungesättigter oder mehrfach ungesättigter Fettsäuren aufweist; c. 5 bis 50% Gewichtsanteile Wasser; d. 1 bis 10% Gewichtsanteile Emulgator enthält, dispergiert und mahlt; (ii) die Glasur wird auf die grüne oder gebrannte Substratfläche verteilt; (iii) die Dekoration erfolgt durch Flach-Siebdruck oder Rotationssiebdruck oder Tiefdruck, wobei eine oder mehrere der unter Punkt (i) aufgeführten Tinten verwendet werden; (iv) das erhaltene Substrat wird bei einer Temperatur zwischen 900 und 1,250°C 15-240 Minuten lang gebrannt.

2. Methode zum Dekorieren von grünen oder gebrannten Keramiksubstraten gemäß Patentanspruch 1, worin 100 Gewichtsanteile Keramikpigmente in einer Mühle in Präsenz von 50 bis 100 Gewichtsanteilen eines Mediums, das zwischen 20 und 40% Gewichtsanteile Glycerol, zwischen 10 und 30% Gewichtsanteile Pflanzenöl und zwischen 20 und 50% Gewichtsanteile Wasser enthält, dispergiert und gemahlen werden.

3. Methode zum Dekorieren von grünen oder gebrannten Keramiksubstraten gemäß Patentanspruch 1 oder 2, worin als Pflanzenöl Rapsöl, Olivenöl, Sonnenblumenöl, Sojaöl, Maiskeimöl und eine Mischung aus diesen gewählt werden kann.

4. Methode zum Dekorieren von grünen oder gebrannten Keramiksubstraten gemäß Patentanspruch 3, worin als Pflanzenöl Rapsöl gewählt wird.

5. Methode zum Dekorieren von grünen oder gebrannten Keramiksubstraten gemäß Patentanspruch 1 oder 2, worin der Emulgator ein Polyol Polyhydroxystearat oder ein Polyol Polyricinoleat ist.

6. Methode zum Dekorieren von grünen oder gebrannten Keramiksubstraten gemäß Patentanspruch 5, worin der Emulgator ein Polyalkylen Glykol Polyhydroxystearat oder ein Polyalkylen Glykol Polyricinoleat ist.

7. Methode zum Dekorieren von grünen oder gebrannten Keramiksubstraten gemäß Patentanspruch 6, worin der Emulgator ein Polyalkylen Glykol Polyhydroxystearat ist, das gewonnen wird, indem 2 Mol Polyhydroxystearinsäure mit einer Polymerisationsnummer zwischen 2 und 10 mit 1 bis 2 Mol Polyethylenglykol eines Molekulargewichts zwischen 200 und 1,000 verestert werden.

8. Methode zum Dekorieren von grünen oder gebrannten Keramiksubstraten gemäß Patentanspruch 7, worin der Emulgator ein Polyalkylen Glykol Polyhydroxystearat ist, das gewonnen wird, indem 2 Mol Polyhydroxystearinsäure mit Polymerisationsnummer zwischen 2 und 6 mit 1.0 bis 1.2 Mol Polyethylenglykol eines Molekulargewichts zwischen 400 und 800 verestert werden.

9. Keramiktinte, bestehend aus 100 Gewichtsanteilen Keramikpigmenten, dispergiert in: A. 2.5 bis 1,500 Gewichtsanteilen Glycerol; B. 2.5 bis 1,500 Gewichtsanteilen Pflanzenöl, das mindestens 70% Gewichtsanteile C₁₆-C₂₂ einfach ungesättigter oder mehrfach ungesättigter Fettsäuren enthält; C. 2.5 bis 1,550 Gewichtsanteile Wasser; D. 0.5 bis 300 Gewichtsanteile Emulgator.

10. Keramiktinte gemäß Patentanspruch 9, worin die Keramikpigmente in 10 bis 40 Gewichtsanteilen Glycerol, 5 bis 33 Gewichtsanteilen Pflanzenöl, 5 bis 550 Gewichtsanteilen Wasser und 1 bis 10 Gewichtsanteilen Emulgator dispergiert sind.

11. Keramiktinte gemäß Patentanspruch 9 oder 10, worin als Pflanzenöl Rapsöl, Olivenöl, Sonnenblumenöl, Sojaöl, Maiskeimöl und eine Mischung aus diesen gewählt werden kann.

12. Keramiktinte gemäß Patentanspruch 11, worin als Pflanzenöl Rapsöl gewählt wird.

13. Keramiktinte gemäß Patentanspruch 9 oder 10, worin der Emulgator ein Polyol Polyhydroxystearat oder ein Polyol Polyricinoleat ist.

14. Keramiktinte gemäß Patentanspruch 13, worin der Emulgator ein Polyalkylen Glykol Polyhydroxystearat oder ein Polyalkylen Glykol Polyricinoleat ist.

15. Keramiktinte gemäß Patentanspruch 14, worin der Emulgator ein Polyalkylen Glykol Polyhydroxystearat ist, das gewonnen wird, indem man 2 Mol Polyhydroxystearinsäure mit Polymerisationsnummer zwischen 2 und 10 mit 1 bis 2 Mol Polyethylen Glykol eines Molekulargewichts zwischen 200 und 1,000 verestert.

16. Keramiktinte gemäß Patentanspruch 15, worin der Emulgator ein Polyalkylen Glykol Polyhydroxystearat ist, das gewonnen wird, indem man 2 Mol Polyhydroxystearinsäure mit Polymerisationsnummer zwischen 2 und 6 mit 1.0 bis 1.2 Mol Polyethylenglykol eines Molekulargewichts zwischen 400 und 800 verestert.

17. Wässrige Emulsion, bestehend aus: a. 5 bis 50% Gewichtsanteilen Glycerol; b. 5 bis 50 % Gewichtsanteilen Pflanzenöl, das mindestens 70% Gewichtsanteile Triglyceride von C₁₆-C₂₂ einfach ungesättigten oder mehrfach ungesättigten Fettsäuren enthält; c. 5 bis 50% Gewichtsanteile Wasser; d. 1 bis 10% Gewichtsanteile Emulgator, der gewonnen wird, indem man Polyhydroxystearin- oder Polyricinolsäure mit einer Polymerisationsnummer zwischen 2 und 10 mit Polyalkylenglykol verestert.

18. Wässrige Emulsion gemäß Patentanspruch 17, bestehend aus 20 bis 40% Gewichtsanteilen Glycerol, 10 bis 30% Gewichtsanteilen Pflanzenöl und 20 bis 50% Gewichtsanteilen Wasser.

19. Wässrige Emulsion gemäß Patentanspruch 18, worin der Emulgator gewonnen wird, indem man 2 Mol Polyhydroxystearinsäure mit Polymerisationsnummer zwischen 2 und 10 mit 1 bis 2 Mol Polyethylenglykol eines Molekulargewichts zwischen 200 und 1,000 verestert.

20. Wässrige Emulsion gemäß Patentanspruch 19, worin der Emulgator gewonnen wird, indem man 2 Mol Polyhydroxystearinsäure mit Polymerisationsnummer zwischen 2 und 6 mit 1.0 bis 1.2 Mol Polyethylenglykol eines Molekulargewichts zwischen 400 und 800 verestert.

## Revendications

1. Procédé de décoration de substrats en céramique cuits ou non cuits comprenant les étapes suivantes : (i) une ou plusieurs encres céramiques sont préparées en dispersant et en broyant dans un broyeur 100 parties en masse de pigments céramiques en présence I) de 0 à 500 parties en masse d' eau, II) de 50 à 3000 parties en masse d' un milieu contenant : a. de 5 à 50 % en masse de glycérol ; b. de 5 à 50 % en masse d'une huile végétale contenant au moins 70 % en masse de triglycérides d' acides gras mono- ou polyinsaturés en C₁₆ à C₂₂ ; c. de 5 à 50 % en masse d' eau ; d. de 1 à 10% en masse d' émulsifiant ; (ii) la glaçure est étalée sur la surface du substrat en céramique cuit ou non cuit ; (iii) la décoration est réalisée par sérigraphie à plat, sérigraphie rotative ou rotogravure, en utilisant une ou plusieurs des encres décrites de l'étape (i) ; (iv) le substrat obtenu est cuit à une température comprise entre 900 et 1250 °C, pendant 15 à 240 minutes.

2. Procédé de décoration de substrats en céramique cuits ou non cuits selon la revendication 1, suivant lequel : 100 parties en masse de pigments céramiques sont dispersées et broyées dans un broyeur en présence de 50 à 100 parties d' un milieu contenant de 20 à 40 % en masse de glycérol, de 10 à 30 % en masse d' huile végétale et de 20 à 50 % en masse d' eau.

3. Procédé de décoration de substrats en céramique cuits ou non cuits selon la revendication 1 ou la revendication 2, ladite huile végétale étant choisie parmi l'huile de colza, l'huile d'olive, l'huile de tournesol, l'huile de soja, l'huile de maïs et leurs mélanges.

4. Procédé de décoration de substrats en céramique cuits ou non cuits selon la revendication 3, ladite huile végétale étant de l'huile de colza.

5. Procédé de décoration de substrats en céramique cuits ou non cuits selon la revendication 1 ou la revendication 2, ledit émulsifiant étant un polyhydroxystéarate de polyol ou un polyricinoléate de polyol.

6. Procédé de décoration de substrats en céramique cuits ou non cuits selon la revendication 5, ledit émulsifiant étant un polyhydroxystéarate de polyalkylène glycol ou un polyricinoléate de polyalkylène glycol.

7. Procédé de décoration de substrats en céramique cuits ou non cuits selon la revendication 6, ledit émulsifiant étant un polyhydroxystéarate de polyalkylène glycol obtenu par estérification de 2 moles d' acide polyhydroxystéarique ayant un indice de polymolécularité (« polymerization number ») compris entre 2 et 10, par 1 à 2 moles d' un polyéthylène glycol ayant une masse moléculaire de 200 à 1000.

8. Procédé de décoration de substrats en céramique cuits ou non cuits selon la revendication 7, ledit émulsifiant étant un polyhydroxystéarate de polyalkylène glycol obtenu par estérification de 2 moles d' acide polyhydroxystéarique ayant un indice de polymolécularité (« polymerization number ») compris entre 2 et 6, par 1,0 à 1,2 moles d' un polyéthylène glycol ayant une masse moléculaire de 400 à 800.

9. Encre céramique comprenant 100 parties en masse de pigments céramiques dispersées dans : A. de 2,5 à 1500 parties en masse de glycérol ; B. de 2,5 à 1500 parties en masse d' une huile végétale contenant au moins 70 % en masse de triglycérides d' acides gras mono- ou polyinsaturés en C₁₈ à C₂₂; C. de 2,5 à 1550 parties en masse d' eau ; D. de 0,5 à 300 parties en masse d' émulsifiant.

10. Encre céramique selon la revendication 9, lesdits pigments céramiques étant dispersés 10 à 40 parties en masse de glycérol, 5 à 33 parties en masse d' huile végétale, de 5 à 550 parties en masse d' eau et de 1 à 10 parties en masse d' émulsifiant.

11. Encre céramique selon la revendication 9 ou la revendication 10, ladite huile végétale étant choisie parmi l'huile de colza, l'huile d'olive, l'huile de tournesol, l'huile de soja, l'huile de maïs et leurs mélanges.

12. Encre céramique selon la revendication 11, ladite huile végétale étant l'huile de colza.

13. Encre céramique selon la revendication 9 ou la revendication 10, ledit émulsifiant étant un polyhydroxystéarate de polyol ou un polyricinoléate de polyol.

14. Encre céramique selon la revendication 13, ledit émulsifiant étant un polyhydroxystéarate de polyalkylène glycol ou un polyricinoléate de polyalkylène glycol.

15. Encre céramique selon la revendication 14, ledit émulsifiant étant un polyhydroxystéarate de polyalkylène glycol obtenu par estérification de 2 moles d' acide polyhydroxystéarique ayant un indice de polymolécularité
(« polymerization number ») compris entre 2 et 10, par 1 à 2 moles d' un polyéthylène glycol ayant une masse moléculaire de 200 à 1000.

16. Encre céramique selon la revendication 15, ledit émulsifiant étant un polyhydroxystéarate de polyalkylène glycol obtenu par estérification de 2 moles d' acide polyhydroxystéarique ayant un indice de polymolécularité
(« polymerization number ») compris entre 2 et 6, par 1,0 à 1,2 moles d' un polyéthylène glycol ayant une masse moléculaire de 400 à 800.

17. Émulsion aqueuse comprenant : a. de 5 à 50 % en masse de glycérol ; b. de 5 à 50 % en masse d' une huile végétale contenant au moins 70 % en masse de triglycérides d' acides gras mono- ou polyinsaturés en C₁₆ à C₂₂ c. de 5 à 50 % en masse d' eau ; d. de 1 à 10 % en masse d' un émulsifiant obtenu par estérification d' acide polyhydroxystéarique ou polyricinoléique ayant un indice de polymolécularité (« polymerization number ») compris entre 2 et 10, par un polyalkylène glycol.

18. Émulsion aqueuse selon la revendication 17 comprenant de 20 à 40 % en masse de glycérol, de 10 à 30 % en masse d' huile végétale et de 20 à 50 % en masse d' eau.

19. Émulsion aqueuse selon la revendication 18, ledit émulsifiant étant obtenu par estérification de 2 moles d' acide polyhydroxystéarique ayant un indice de polymolécularité (« polymerization number ») compris entre 2 et 10, par 1 à 2 moles d' un polyéthylène glycol ayant une masse moléculaire de 200 à 1000.

20. Émulsion aqueuse selon la revendication 19, ledit émulsifiant étant obtenu par estérification de 2 moles d' acide polyhydroxystéarique ayant un indice de polymolécularité (« polymerization number ») compris entre 2 et 6, par 1,0 à 1,2 moles d' un polyéthylène glycol ayant une masse moléculaire de 400 à 800.
